# EUROPÄISCHE PATENTANMELDUNG

(11) **EP 4 488 306 A1**
(43) Veröffentlichungstag der Anmeldung: **08.01.2025**
(21) Anmeldenummer: 23184173.5
(22) Anmeldetag: 07.07.2023
(51) Int. Cl.: C08G 18/32, C08G 18/38, C08G 18/72, C08G 18/78, C08G 18/79, C09J 175/02, C08K 5/11

(54) **MEHRKOMPONENTEN-HARZSYSTEM MIT MINDESTENS EINEM WEICHMACHER, MÖRTELMASSE AUF BASIS VON ISOCYANAT-AMIN-ADDUKTEN SOWIE VERFAHREN UND VERWENDUNG DES MEHRKOMPONENTEN-HARZSYSTEMS ZUR BEFESTIGUNG VON KONSTRUKTIONSELEMENTEN**

(71) Anmelder: Hilti Aktiengesellschaft, 9494 Schaan (LI)
(72) Erfinder: Bürgel, Thomas, 86899 Landsberg (DE); Plenk, Christian, 86916 Kaufering (DE); Kumru, Memet-Emin, 86199 Augsburg (DE)
(74) Vertreter: Hilti Aktiengesellschaft Corporate Intellectual Property

(57) **Zusammenfassung**

Die vorliegende Erfindung betrifft ein Mehrkomponenten-Harzsystem enthaltend eine Isocyanatkomponente, die mindestens ein aliphatisches und/oder aromatisches Polyisocyanat mit einer mittleren NCO-Funktionalität von 2 oder größer umfasst, und eine Aminkomponente, die mindestens ein gegenüber Isocyanatgruppen reaktives Amin mit einer mittleren NH-Funktionalität von 2 oder größer umfasst, wobei die Isocyanatkomponente und gegebenenfalls die Aminkomponente mindestens einen Weichmacher enthält. Darüber hinaus betrifft die Erfindung eine Mörtelmasse auf Basis von Isocyanat-Amin-Addukten hergestellt aus den Komponenten des erfindungsgemäßen Mehrkomponenten-Harzsystem. Ferner betrifft die Erfindung ein Verfahren sowie die Verwendung des erfindungsgemäßen Mehrkomponenten-Harzsystem oder der erfindungsgemäßen Mörtelmasse zur chemischen Befestigung von Konstruktionselementen in mineralischen Untergründen oder in Holz, vorzugsweise in Bohrlöchern.

## Beschreibung

Die vorliegende Erfindung betrifft ein Mehrkomponenten-Harzsystem enthaltend eine Isocyanatkomponente, die mindestens ein aliphatisches und/oder aromatisches Polyisocyanat mit einer mittleren NCO-Funktionalität von 2 oder größer umfasst, und eine Aminkomponente, die mindestens ein gegenüber Isocyanatgruppen reaktives Amin mit einer mittleren NH-Funktionalität von 2 oder größer umfasst, wobei die Isocyanatkomponente und gegebenenfalls die Aminkomponente mindestens einen Weichmacher enthält. Darüber hinaus betrifft die Erfindung eine Mörtelmasse auf Basis von Isocyanat-Amin-Addukten hergestellt aus den Komponenten des erfindungsgemäßen Mehrkomponenten-Harzsystem. Ferner betrifft die Erfindung ein Verfahren sowie die Verwendung des erfindungsgemäßen Mehrkomponenten-Harzsystem oder der erfindungsgemäßen Mörtelmasse zur chemischen Befestigung von Konstruktionselementen in mineralischen Untergründen oder in Holz, vorzugsweise in Bohrlöchern.

Im Bauwesen werden Harzsysteme zur chemischen Befestigung von Konstruktionselementen, wie beispielsweise Ankerstangen, Bewehrungseisen und Schrauben, in Bohrlöchern oder Spalten von Bauwerken eingesetzt. Derartige Harzsysteme werden auch als "chemische Dübel" bezeichnet, wobei ein chemischer Dübel in der Regel eine Mörtelmasse ist, also neben den das Harz bildenden Komponenten des Harzsystems noch Füllstoff enthält. Gleichermaßen spielen Harzsysteme eine wichtige Rolle für die Verwendung als Klebstoff oder Beschichtungen (z. B. für Bodenbeläge).

Diese Harzsysteme können als einheitliche Harzmasse vorliegen, oder als System aus mehreren Komponenten. Üblicherweise sind Harzsysteme kommerziell als ein Mehrkomponenten-Harzsystem erhältlich. Unter einem Mehrkomponenten-Harzsystem ist ein Harzsystem mit mehreren Komponenten, typischerweise zwei Komponenten (Zwei-Komponenten-System), mit (i) mindestens einer Komponente (A) umfassend eine härtbare Verbindung, und (ii) mindestens einer Härterkomponente (B) umfassend einen Härter für besagte härtbare Verbindung, sowie gegebenenfalls weiteren separaten Komponenten zu verstehen. Die Komponenten befinden sich in separaten Behältern, so dass sie während der Lagerung und vor der Anwendung nicht miteinander in Berührung kommen und nicht miteinander reagieren können. Zur bestimmungsgemäßen Verwendung eines Mehrkomponenten-Harzsystems werden die Komponenten (A) und (B) und gegebenenfalls weitere Komponenten am gewünschten Einsatzort vermischt, so dass dort die Härtungsreaktion stattfinden kann.

Zur Aufbewahrung vor der Nutzung eignen sich Patronen, beispielsweise aus Kunststoff, Keramik oder Glas, in denen die Komponenten durch zerstörbare Abgrenzungswandungen oder integrierte separate zerstörbare Behältnisse voneinander getrennt angeordnet sind; beispielsweise als ineinander verschachtelte Patronen, bevorzugt Zweikammerpatronen. Zur Aufbewahrung vor der Nutzung sind aber insbesondere Mehr- oder bevorzugt Zweikomponentenkartuschen üblich, in deren Kammern die Komponenten (A) und (B) eines Mehrkomponenten-Harzsystems getrennt voneinander enthalten sind. Durch Zerstörung der Abgrenzungen in den Patronen bzw. Ausdrücken der Kartuschen durch beispielsweise einen Statikmischer hindurch werden die beiden oder mehreren Komponenten vermischt. Dadurch wird eine Härtungsreaktion, d.h. eine Polymerisation, in Gang gebracht und das Harz gehärtet.

In einem Mehrkomponenten-Harzsystem können andere, übliche Bestandteile, wie beispielsweise Füllstoffe, Additive, Beschleuniger, Inhibitoren, Rheologieadditive, Lösungsmittel und Reaktivverdünner, in einer oder beiden Komponenten (A) und/oder (B), sowie optional weiteren Komponenten enthalten sein. Mehrkomponenten-Harzsysteme können gegebenenfalls auch Füllstoffe enthalten, welche selbst durch hydraulisches Abbinden zur Verfestigung beitragen können, wie im Falle von Zement.

Als chemische Dübel sind vor allem Mehrkomponenten-Harzsysteme auf der Basis von Methacrylatharzen sowie auf der Basis von Epoxidharzen bekannt. Diese Harzsysteme eignen sich jedoch oft nur beschränkt für den Einsatz bei niedrigen Temperaturen, also Temperaturen, welche unterhalb von 25 °C oder sogar unterhalb von 0°C liegen. Für Einsätze in kalten Regionen bzw. bei kalten Umgebungstemperaturen besteht daher ein Bedarf an hierfür besser geeigneten Harzsystemen.

Neben der Weiterentwicklung und Verbesserung der bestehenden Mehrkomponenten-Harzsysteme werden daher zunehmend auch andere als die vorgenannten Harzsysteme auf ihre Eignung als Basis für chemische Dübel untersucht. Zunehmend werden Polyurethane und Polyharnstoffe, also Polymere auf Polyisocyanatbasis, als Harze für chemische Dübel in Betracht gezogen.

So beschreibt die EP 3 447 078 A1 einen chemischen Dübel, der aus einer Mehrkomponentenmasse hergestellt wird, welcher eine Polyisocyanatkomponente (A) und eine Polyasparaginsäureesterkomponente (B) umfasst. Bei Vermischen der beiden Komponenten entsteht in einer Polyadditionsreaktion Polyharnstoff, welcher das Harz als Bindemittel der Mörtelmasse bildet.

Aus der DE 10 2008 018 861 A1 sind Mehrkomponenten-Systeme auf der Grundlage von Polyurethanen bekannt, die aus einem oder mehreren Di- und/oder Polyisocyanaten, einem oder mehreren Di- und/oder Polyolen oder Di- und/oder Polyaminen oder einer oder mehreren di- und/oder polyfunktionellen Amino-, Hydroxy-und/oder Amino- und Hydroxyverbindungen gebildet sind.

Die aus dem Stand der Technik bekannten Systeme ermöglichen jedoch nicht die für manche Zwecke bzw. Einsatzbereiche bei der chemischen Befestigung erforderlichen hohen Lasten bei niedrigen Temperaturen, also Temperaturen, welche unterhalb von 25 °C oder sogar unterhalb von 0°C liegen.

Es besteht daher ein Bedarf an alternativen Harzsystemen, die bei niedrigen Temperaturen, eine Befestigung von hohen Lasten ermöglichen. Insbesondere sollte es das alternative Harzsystem ermöglichen, das Lastniveau bei Temperaturen unterhalb von 0°C zu verbessern.

Für Einsätze in kalten Regionen bzw. bei kalten Umgebungstemperaturen besteht daher ein Bedarf an hierfür besser geeigneten Harzsystemen.

Aufgabe der vorliegenden Erfindung ist es daher, ein Mehrkomponenten-Harzsystem auf Basis von Polyisocyanat zur Verfügung zu stellen, welches für Befestigungszwecke geeignet ist. Eine aus einem solchen Mehrkomponenten-Harzsystem erzeugte Mörtelmasse soll im Vergleich zu herkömmlichen chemischen Dübeln bei niedrigeren Temperaturen einsetzbar sein, vorteilhafterweise bei vergleichbar hoher Auszugsfestigkeit unter Referenzbedingungen. Insbesondere ist es Aufgabe der vorliegenden Erfindung, eine Mörtelmasse auf Basis von Polyisocyanaten zur Verfügung zu stellen, die eine verbesserte Auszugsfestigkeit (Verbundspannung) bei niedrigen Temperaturen, insbesondere bei Temperaturen unterhalb von 0°C wie beispielsweise -10 °C, aufweist.

Es wurde nun gefunden, dass diese Aufgabe gelöst wird durch das in den Ansprüchen definierte mindestens einen Weichmacher enthaltende Mehrkomponenten-Harzsystem, die aus den Komponenten dieses Mehrkomponenten-Harzsystems erhältliche Mörtelmasse, und deren hierin beschriebene Verwendung.

Überraschenderweise wurde festgestellt, dass das erfindungsgemäße mindestens einen Weichmacher enthaltende Mehrkomponenten-Harzsystem auch bei Temperaturen unterhalb von 0°C wie beispielsweise -10 °C, eine deutlich verbesserte Auszugsfestigkeit (Verbundspannung) aufweist. Ein weiterer Vorteil der vorliegenden Erfindung ist, dass die erfindungsgemäße, aus den Komponenten des hierin beschriebenen Mehrkomponenten-Harzsystems, mindestens einen Weichmacher enthaltende Mörtelmasse längere Verarbeitungszeiten als herkömmliche Mörtelmassen ermöglicht.

Alle Kombinationen der hierin beschriebenen Ausführungsformen der Erfindung sind ebenfalls Gegenstand der Erfindung.

Die vorliegende Erfindung betrifft ein Mehrkomponenten-Harzsystem enthaltend
eine Isocyanatkomponente, die mindestens ein aliphatisches und/oder aromatisches Polyisocyanat mit einer mittleren NCO-Funktionalität von 2 oder größer umfasst, und
eine Aminkomponente, die mindestens ein gegenüber Isocyanatgruppen reaktives Amin mit einer mittleren NH-Funktionalität von 2 oder größer umfasst,
mit der Maßgabe, dass das Mehrkomponenten-Harzsystem frei von Polyasparaginsäureestern ist,
wobei die Isocyanatkomponente und/oder die Aminkomponente mindestens einen Füllstoff sowie mindestens ein Rheologieadditiv umfasst,
und der Gesamtfüllgrad einer Mörtelmasse hergestellt durch Vermischen der Isocyanatkomponente und der Aminkomponente in einem Bereich von 30 bis 70 % liegt, wobei die Isocyanatkomponente und gegebenenfalls die Aminkomponente ein Molekularsieb enthält, und
wobei die Isocyanatkomponente mindestens einen Weichmacher enthält.

In einer Ausführungsform des hierin beschriebenen Mehrkomponenten-Harzsystems ist der mindestens eine Weichmacher ausgewählt aus der Gruppe bestehend aus Alkandicarbonsäure-basierten Weichmachern, Alkendicarbonsäure-basierten Weichmachern, Cyclohexandisäure-basierten Weichmachern, Phthalsäure-basierten Weichmachern, Trimellithsäure-basierten Weichmachern, und Methyl-O-acetylricinoleat.

In einer Ausführungsform des hierin beschriebenen Mehrkomponenten-Harzsystem ist der mindestens eine Weichmacher ausgewählt aus der Gruppe bestehend aus C₃- bis C₁₀- Alkandicarbonsäure-basierten Weichmachern.

In einer Ausführungsform des hierin beschriebenen Mehrkomponenten-Harzsystems ist der mindestens eine Weichmacher ausgewählt aus der Gruppe bestehend aus Diethylmalonat, Diethyladipat, Diisobutyladipat, Bis(2-ethylhexyl)adipat, Diisononyladipat, Diethylfumarat, 1,2-Cyclohexandicarbonsäurediisononylester, Diisononylphthalat, Tris(2-ethylhexyl)trimellitat, und Methyl-O-acetylricinoleat und Mischungen von zwei oder mehr davon, vorzugsweise ist der Weichmacher Diethylmalonat, Diethylfumarat oder Diethyladipat.

In einer Ausführungsform des hierin beschriebenen Mehrkomponenten-Harzsystems enthält das Mehrkomponenten-Harzsystem von 1,0 Gew.-% bis 4,0 Gew.-%, vorzugsweise von 1,2 Gew.-% bis 3,5 Gew.-%, besonders bevorzugt von 1,4 Gew.-% bis 3,3 Gew.-% des Weichmachers.

In einer Ausführungsform des hierin beschriebenen Mehrkomponenten-Harzsystems enthält die Isocyanatkomponente und gegebenenfalls die Aminkomponente zusätzlich ein Silan, das vorzugsweise aus der Gruppe bestehend aus 3-Aminopropyltrialkoxysilanen, 3-Glycidyloxyalkyltrialkoxysilanen, Bis-(3-trialkoxysilylpropyl)aminen, 3-Mercaptopropyltrialkoxysilanen, 3-(Meth)acryloxyalkyltrialkoxysilanen, Alkenylalkoxysilanen, Tetraalkoxysilanen, und Trialkoxyalkylsilanen, und Gemischen von zwei oder mehr davon ausgewählt ist, vorzugsweise ist das Silan 3-Glycidyloxypropyltrimethoxysilan, 3-(Meth)acryloylpropyltrimethoxysilan, Vinyltrimethoxysilan oder Vinylethoxysilan.

In einer Ausführungsform des hierin beschriebenen Mehrkomponenten-Harzsystems enthält die Aminkomponente als ein gegenüber Isocyanatgruppen reaktives Amin Diethyltoluoldiamin (DETDA) und zusätzlich ein weiteres gegenüber Isocyanatgruppen reaktives Amin.

In einer Ausführungsform des hierin beschriebenen Mehrkomponenten-Harzsystems liegen das Polyisocyanat und das Amin in einem Mengenverhältnis vor, bei dem das Verhältnis von mittlerer NCO-Funktionalität des Polyisocyanats zu mittlerer NH-Funktionalität des Amins zwischen 0,3 und 2,0 liegt.

In einer Ausführungsform des hierin beschriebenen Mehrkomponenten-Harzsystems enthält die Isocyanatkomponente mindestens ein aliphatisches Polyisocyanat ausgewählt aus der Gruppe bestehend aus Bis-(isocyanatoalkyl)ethern oder Alkandiisocyanaten, vorzugsweise Methandiisocyanat, Propandiisocyanaten, Butandiisocyanaten, Pentandiisocyanaten, Hexandiisocyanaten, vorzugsweise Hexamethylendiisocyanat, HDI), Heptandiisocyanaten, vorzugsweise 2,2-Dimethylpentan-1,5-diisocyanat, Octandiisocyanaten, Nonandiisocyanaten, vorzugsweise Trimethyl-HDI (TMDI) in der Regel als Gemisch der 2,4,4- und 2,2,4-Isomeren), 2-Methylpentan-1,5-diisocyanat (MPDI), Nonantriisocyanaten (vorzugsweise 4-Isocyanatomethyl-1,8-octandiisocyanat, 5-Methylnonandiisocyanat, Dekandiisocyanaten, Dekantriisocyanaten, Undekandiisocyanaten, Undekantriisocyanaten, Dodecandiisocyanaten, Dodecantriisocyanaten, 1,3- sowie 1,4-Bis-(isocyanatomethyl)cyclohexan (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI), 3(4)-Isocyanatomethyl-1-methyl-cyclohexylisocyanat (IMCI), Octagydro-4,7- methano-1H-indendiemthyldiisocyanat, Norbornendiisocyanat, 5-Isocyanato-1-(isocyanatomethyl)-1,3,3-trimethylcyclohexan, oder Ureylenbis(p-phenylenmethylene-p-phenylen)diiscoyanat; ganz besonders bevorzugt sind Hexamethylendiisocyanat, HDI) und Pentadiisocyanat (PDI), sowie Gemische davon.

In einer Ausführungsform des hierin beschriebenen Mehrkomponenten-Harzsystems enthält die Aminkomponente mindestens ein gegenüber Isocyanatgruppen reaktives Amin ausgewählt aus der Gruppe bestehend aus 1,2-Diaminoethan(ethylendiamin), 1,2-Propandiamin, 1,3- Propandiamin, 1,4-Diaminobutan, 2,2-Dimethyl-1, 3-propandiamin(neopentandiamin), Diethylaminopropylamin (DEAPA), 2-Methyl-1 ,5-diaminopentan, 1,3-Diaminopentan, 2,2,4- oder 2,4,4-Trimethyl-1 , 6-diaminohexan und Gemische davon (TMD), 1,3- Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1 , 7-diamin, 1 ,11-Diamino-3, 6,9-trioxundecan, 1,8-Diamino-3, 6-dioxaoctan, 1 ,5-Diamino-methyl-3-azapentan, 1,10-Diamino-4,7-dioxadecan, Bis(3-aminopropyl)amin, 1 ,13-Diamino-4,7, 10-trioxatridecan, 4-Aminomethyl-1 , 8-diaminooctan, 2-Butyl-2-ethyl-1 , 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 3,3'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02'6]decan (Isomerengemisch, tricyclischer primärer Amine; TCD-Diamin), Methylcyclohexyl-diamin (MCDA), N,N'-Diaminopropyl-2-methyl-cyclohexan-1 ,3-diamin, N,N'-Diaminopropyl- 4-methyl-cyclohexan-1 ,3-diamin, N-(3-Aminopropyl)cyclohexylamin, und 2-(2, 2,6,6-tetramethylpiperidin-4-yl)propan-1 ,3-diamin, 2-Methylpentandiamin (DYTEK A), N-Ethylaminopiperazin (N-EAP), N-Aminoethyl-piperazine (N-AEP), 2,4,6-tri(propan-2-yl)benzene-1,3-diamin, 4-ethyl-2,6-di(propan-2-yl)benzene-1,3-diamin, 4-methyl-2,6-di(propan-2-yl)benzene-1,3-diamin, 2,5-Bis(methylsulfonyl)-1,4-benzenediamin, 5-chloro-4,6-diethyl-2-methyl-1,3-benzendiamin, 5-chloro-4,6-diethyl-6-methyl-1,3-benzendiamin, 4-fluoro-5-(1-methylethyl)-1,2-benzendiamin, 2,4,6-trimethyl-5-nitro-1,3-benzendiamin sowie Mischungen davon.

In einer Ausführungsform des hierin beschriebenen Mehrkomponenten-Harzsystems enthält das Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin, und als Weichmacher Diethylmalonat, Diethylfumarat oder Diethyladipat, und Mischungen von zwei oder mehr davon, vorzugsweise Diethylmalonat oder Diethylfumarat.

Ein weiterer Gegenstand der Erfindung ist eine Mörtelmasse erhältlich durch Vermischen der Isocyanatkomponente, der Aminkomponente, eines Molekularsiebs, mindestens eines Weichmachers, gegebenenfalls eines Silans, wie hierin definiert und gegebenenfalls Diethyltoluoldiamin (DETDA).

Darüber hinaus betrifft die vorliegende Erfindung ein Verfahren zur chemischen Befestigung von Konstruktionselementen in mineralischen Untergründen, vorzugsweise in Bohrlöchern, wobei zur chemischen Befestigung ein hierin beschriebenes Mehrkomponenten-Harzsystem oder eine hierin beschriebene Mörtelmasse verwendet werden.

Ferner betrifft die vorliegende Erfindung die Verwendung eines ein hierin beschriebenen Mehrkomponenten-Harzsystems oder hierin beschriebenen Mörtelmasse zur chemischen Befestigung von Konstruktionselementen in mineralischen Untergründen oder in Holz, vorzugsweise in Bohrlöchern.

Darüber hinaus betrifft die vorliegende Erfindung die Verwendung eines Weichmachers in einem Mehrkomponenten-Harzsystem auf Basis von Isocyanat-Amin-Addukten für die chemische Befestigung zur Erhöhung der Auszugsfestigkeit (Verbundspannung) bei niedrigen Temperaturen, insbesondere bei Temperaturen unterhalb von 0°C.

Durchhärtung bei Temperaturen von 25°C oder weniger zur Erhöhung der Referenzlast eines chemischen Dübels.

Überraschenderweise wurde festgestellt, dass die Zugabe von mindestens einem Weichmacher zu einer Isocyanatkomponente oder gegebenefalls zu einer Aminkomponente, einen Einsatz des hierin beschriebenen Mehrkomponenten-Harzsystems (insbesondere als chemischer Dübel) bei niedrigeren Untergrundtemperaturen ermöglicht, als dies ohne die Zugabe von mindestens einem Weichmacher der Fall wäre. Bei einer Untergrundtemperatur deutlich unterhalb von 25°C (beispielsweise bei -5°C oder -10°C) kann eine deutlich höhere Verbundspannung erzielt werden als dies mit einem Vergleichs-Mehrkomponenten-Harzsystem, in welchem der mindestens eine Weichmacher fehlt, der Fall ist. Dadurch wird es möglich, auch bei niedrigen Untergrundtemperaturen eine Verbundspannung von mindestens 80%, bevorzugt sogar mindestens 90% der Verbundspannung zu erzielen, welche bei einer Untergrundtemperatur von 25°C erzielt werden.

Die Verwendung erfolgt typischerweise bei einer Umgebungstemperatur von etwa -30°C bis etwa 40°C, bevorzugt von etwa -20°C bis etwa 25°C, stärker bevorzugt von etwa - 15°C bis etwa 0°C, noch bevorzugter von etwa -10°C bis etwa -5°C. Außerdem erfolgt die Verwendung typischerweise auf bzw. in einem in Bauwerken vorkommenden Untergrund wie Stahl, Beton, Holz oder Ziegel. Ganz besonders bevorzugt ist die Verwendung bei einer Umgebungstemperatur von etwa -10°C bis etwa -5°C.

Die Anwesenheit von Polyasparaginsäureestern in Isocyanat-Amin-basierten Bindemittelsystemen, welche in Mörtelmassen zur chemischen Befestigung verwendet werden, hat einen negativen Einfluss auf die Temperaturrobustheit der ausgehärteten Mörtelmassen. Insbesondere zeigen entsprechende Systeme eine stark verminderte Verbundspannung bei erhöhten Temperaturen, wie beispielsweise bei 80 °C. Es ist daher erfindungswesentlich, dass das Mehrkomponenten-Harzsystem und insbesondere die Aminkomponente des Mehrkomponenten-Harzsystems frei von Polyasparaginsäureestern ist.

Im Sinne der Erfindung haben die hier und in der nachfolgenden Beschreibung verwendeten Begriffe die folgende Bedeutung:
- *"Mehrkomponenten-Harzsystem"* bezeichnet ein Harzsystem, das mehrere voneinander getrennt gelagerte Komponenten umfasst, wobei das Harzsystem mindestens eine Harzkomponente (A) und mindestens eine Härterkomponente (B) umfasst, so dass eine Härtung erst nach dem Mischen aller Komponenten erfolgt. In einer bevorzugten Ausführungsform ist ein Mehrkomponenten-Harzsystem ein Zwei-Komponenten-Harzsystem.
- *"Harzmasse"* bezeichnet eine reaktionsfähige Masse umfassend einen härtbaren Inhaltsstoff (im Rahmen der vorliegenden Erfindung: ein Polyisocyanat) und einen geeigneten Härter für den härtbaren Inhaltsstoff. Erfindungsgemäß wird diese Harzmasse typischerweise durch Mischen der Harzkomponente (A) (erfindungsgemäß ist dies die Isocyanatkomponente) und der Härterkomponente (B) erhalten und anschließend zur chemischen Befestigung, als Klebstoff verwendet.
- *"Isocyanate"* sind Verbindungen, die eine funktionelle Isocyanatgruppe -N=C=O aufweisen und durch die Struktureinheit R-N=C=O charakterisiert werden.
- *"Polyisocyanate"* sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.
- *"mittlere NCO-Funktionalität"* beschreibt die gemittelte Anzahl an reaktiven Isocyanat-Gruppen pro Mol eines Polyisocyanats oder einer Mischung aus mehreren Polyisocyanaten. Sie wird für eine Mischung nach der folgenden Formel ermittelt: mittlere NCO-Funktionalität (Mischung) = Σ NCO-Funktionalität (Polyisocyanat i) / nᵢ, also der Summe der NCO-Funktionalität der Einzelpolyisocyanate i geteilt durch die Anzahl der Einzelpolyisocyanate i.
- *"Amine"* sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen RNH₂ (primäre Amine) und R₂NH (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)). Von dem Begriff der Amine im Sinne der vorliegenden Erfindung ist die Verbindungsklasse der Polyasparaginsäureester explizit ausgeschlossen. Diese werden separat unter dem Begriff der Polyasparaginsäureester definiert.
- *"NH-Funktionalität"* beschreibt die Anzahl aktiver Wasserstoffatome, die mit einer Isocyanatgruppe reagieren können, in einer Aminogruppe.
- *"mittlere NH-Funktionalität"* beschreibt die Anzahl der an ein Stickstoffatom gebundenen Wasserstoffatome in einem Amin. Demnach weist beispielsweise ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindung enthaltenen Aminogruppe(n) handelt. Die Aminogruppen können dabei primäre oder sekundäre Aminogruppen sein. Die mittlere NH-Funktionalität wird für eine Mischung nach der folgenden Formel ermittelt: mittlere NH-Funktionalität (Mischung) = Σ NH-Funktionalität (Amin j) / nj, also die Summe der NH-Funktionalität der Einzelamine j geteilt durch die Anzahl der Einzelamine j.
- *"Polyasparaginsäureester"* bezeichnet Verbindungen der allgemeinen Formel: 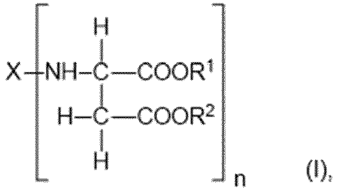 in der
   R¹ und R² gleich oder verschieden sein können und einen organischen Rest bedeuten, der gegenüber Isocyanatgruppen inert ist,
   X einen n-wertigen organischen Rest bedeutet, der gegenüber Isocyanatgruppen inert ist, und
   n eine ganze Zahl von mindestens 2 bedeutet, bevorzugt von 2 bis 6, weiter bevorzugt von 2 bis 4 und besonders bevorzugt 2 bedeutet.
- *"frei von Polyasparaginsäureestern"* im Sinne der vorliegenden Anmeldung bedeutet, dass der Anteil an Polyasparaginsäureestern im Mehrkomponenten-Harzsystem bevorzugt geringer als 2 Gew.-%, weiter bevorzugt geringer als 0,5 Gew.-% und noch weiter bevorzugt geringer als 0,1 Gew.-% ist jeweils bezogen auf das Gesamtgewicht des Mehrkomponenten-Harzsystems. Die Anwesenheit von Polyasparaginsäureestern in den vorgenannten gewichtsprozentualen Bereichen kann auf potentielle Verunreinigungen zurückgeführt werden. Besonders bevorzugt liegt der Anteil an Polyasparaginsäureestern im Mehrkomponenten-Harzsystem jedoch bei 0,0 Gew.-% bezogen auf das Gesamtgewicht des Mehrkomponenten-Harzsystems.
- *"Isocyanatkomponente"* bzw. "*Komponente (A)"* beschreibt eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst.
- *"Aminkomponente"* bzw. "*Komponente (B)"* beschreibt eine Komponente des Mehrkomponenten-Harzsystems, welche mindestens ein gegenüber Isocyanatgruppen reaktives Amin und ggf. mindestens einen Füllstoff und/oder mindestens ein Rheologieadditiv und/oder weitere Additive umfasst. Im Sinne der vorliegenden Erfindung umfasst die Aminkomponente in einer bevorzugten Ausführungsform mindestens ein reaktives Amin und als weiteres reaktives Amin zusätzlich Diethyltoluoldiamin (DETDA) und/oder 2,4-Diamino-3,5-dimethylthiotoluol (Dimethylthio-toluoldiamin, DMTDA), besonders bevorzugt DETDA. In einer besonders bevorzugten Ausführungsform enthält die Aminkomponente als ein gegenüber Isocyanatgruppen reaktives Amin Diethyltoluoldiamin (DETDA) und zusätzlich ein weiteres gegenüber Isocyanatgruppen reaktives Amin.
- *"Füllstoff"* bezeichnet eine organische oder anorganische, insbesondere anorganische Verbindung.
- *"Molekularsieb"* bezeichnet vorzugsweise Zeolith als Füllstoff, zur Erhöhung der Leistungsfähigkeit (Auszugswerte) des Mehrkomponenten-Harzsystems.
- *"Rheologieadditiv"* bezeichnet Additive, welche in der Lage sind, das Viskositätsverhalten der Isocyanatkomponente, der Aminkomponente und des Mehrkomponenten-Harzsystems bei der Lagerung, der Applikation und/oder bei der Aushärtung zu beeinflussen. Das Rheologieadditiv verhindert u.a. eine Sedimentation der Füllstoffe in der Polyisocyanatkomponente und/oder der Aminkomponente. Ferner verbessert es die Mischbarkeit der Komponenten und verhindert eine mögliche Phasenseparation.
- *"Mörtelmasse"* bezeichnet die Zusammensetzung, die durch Mischen der Isocyanatkomponente und der Aminkomponente erhalten wird, und als solche direkt zur chemischen Befestigung verwendet werden kann.
- "Weichmacher" bezeichnet organische Flüssigkeiten, die Thermoplasten oder Duromeren vor der Polymerisation zugesetzt werden, um die mechanischen oder chemischen Eigenschaften zu beeinflussen. Weichmacher polymerisieren grundsätzlich nicht in das Polymernetzwerk mit ein und sind entsprechend nicht kovalent gebunden.
- *"Temperaturrobustheit"* bezeichnet die Änderung der Verbundspannung einer ausgehärteten Mörtelmasse bei einer erhöhten Temperatur im Vergleich zur Referenzverbundspannung. Im Rahmen der vorliegenden Erfindung wird die Temperaturrobustheit insbesondere als das Verhältnis der Verbundspannung bei 80 °C zur Referenzverspannung angegeben.
- *"Isocyanat-Amin-Addukte"* sind Polymere, die durch Polyadditionsreaktion von Isocyanaten mit Aminen entstehen. Bevorzugt handelt es sich bei den erfindungsgemäßen Isocyanat-Amin-Addukten um Polyharnstoffe, welche mindestens ein Strukturelement der Form -[-NH-R-NH--NH-R'-NH-] aufweisen.
- *"aliphatische Verbindungen"* sind acyclische oder cyclische, gesättigte oder ungesättigte Kohlenstoffverbindungen, ausgenommen aromatische Verbindungen.
- *"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist.
- *"aromatische Verbindungen"* sind Verbindungen, die der Hückel (4n+2)-Regel folgen.
- *"poly", "Poly"* als Präfix bedeutet, dass zwei oder mehr der sich an dieses Präfix anschließenden Gruppen in einer Verbindung enthalten sind. Im Rahmen der vorliegenden Erfindung bedeutet dies insbesondere, dass Diisocyanate vom Begriff *"Polyisocyanate"* umfasst sind.
- *"ein", "eine", "einer"* als Artikel vor einer chemischen Verbindungsklasse, z.B. vor dem Wort "Füllstoff", bedeutet, dass eine oder mehrere unter diese chemische Verbindungsklasse fallende Verbindungen, z.B. verschiedene "Füllstoffe", gemeint sein können.
- *"mindestens ein", "mindestens eine", "mindestens einer"* bedeutet zahlenmäßig "*ein oder mehrere"*; in einer bevorzugten Ausführungsform ist mit diesem Begriff zahlenmäßig *"ein", "eine", "einer"* gemeint.
- "*etwa"* vor einem Zahlenwert erlaubt eine Abweichung von ±10 %, in einer bevorzugten Ausführungsform ±5 %, in einer stark bevorzugten Ausführungsform ±1 % von diesem Zahlenwert, in der am stärksten bevorzugten Ausführungsform bedeutet "*etwa*" dass genau dieser Zahlenwert gemeint ist, also eine Abweichung von ±0 %.
- *"enthalten", "umfassen"* und *"beinhalten",* bedeuten, dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag der vorliegenden Anmeldung aktuellen Ausgabe verwendet. Alle Handelsnamen entsprechen den Produkten, wie sie unter diesen Handelsnamen zum Zeitpunkt des Anmeldetages der vorliegenden Anmeldung verfügbar waren.

Das hierin beschriebene erfindungsgemäße Mehrkomponenten-Harzsystem ist ein System, das zwei oder mehrere räumlich voneinander getrennt gelagerte Komponenten umfasst. In einer bevorzugten Ausführungsform handelt es sich bei dem erfindungsgemäßen Mehrkomponenten-Harzsystem um ein Zwei-Komponenten-Harzsystem, das eine Isocyanatkomponente und eine Aminkomponente umfasst. Die Isocyanatkomponente und eine Aminkomponente liegen vor der Anwendung reaktionsinhibierend getrennt voneinander vor.

Sowohl die Isocyanatkomponente als auch die Aminkomponente umfassen typischerweise neben dem mindestens einen Polyisocyanat bzw. dem mindestens einen Amin mindestens einen weiteren Bestandteil. Weitere übliche Bestandteile sind insbesondere Füllstoffe, Rheologieadditive und Verdicker (Thixotropiermittel).

Im Folgenden werden die Bestandteile des erfindungsgemäßen Mehrkomponenten-Harzsystems und die bevorzugten Ausführungsformen dieser Bestandteile beispielhaft anhand eines Zwei-Komponenten-Systems erläutert. Gewichtanteile basieren jeweils auf dem Gesamtgewicht des erfindungsgemäßen Mehrkomponenten-Harzsystems, es sei denn sie sind anders definiert.

### Polyisocyanate in der Isocyanatkomponente

Die Isocyanatkomponente des erfindungsgemäßen Mehrkomponenten-Harzsystems umfasst mindestens ein aliphatisches und/oder aromatisches Polyisocyanat mit einer mittleren NCO-Funktionalität von etwa 2 oder größer.

Als Polyisocyanat können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden. Die mittlere NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Das Polyisocyanat hat bevorzugt eine mittlere NCO-Funktionalität von etwa 2 oder größer, stärker bevorzugt von etwa 2 bis etwa 10, noch stärker bevorzugt von etwa 2 bis etwa 6, am bevorzugtesten von etwa 2 bis etwa 4.

In einer bevorzugten Ausführungsform umfasst die Isocyanatkomponente des erfindungsgemäßen Mehrkomponenten-Harzsystems mindestens ein aliphatisches oder mindestens ein aromatisches Polyisocyanat mit einer mittleren NCO-Funktionalität von etwa 2 oder größer.

In einer besonders bevorzugten Ausführungsform umfasst die Isocyanatkomponente des erfindungsgemäßen Mehrkomponenten-Harzsystems mindestens ein aliphatisches Polyisocyanat mit einer mittleren NCO-Funktionalität von etwa 2 oder größer.

In einer ganz besonders bevorzugten Ausführungsform umfasst die Isocyanatkomponente des erfindungsgemäßen Mehrkomponenten-Harzsystems zwei aliphatische Polyisocyanate mit einer mittleren NCO-Funktionalität von etwa 2 oder größer.

Als das mindestens eine aliphatische und/oder aromatische Polyisocyanat in Komponente (A) der vorliegenden Erfindung kommt eine Vielzahl der hierfür dem Fachmann bekannten und kommerziell erhältlichen Verbindungen, einzeln oder in beliebigen Mischungen untereinander, in Betracht.

Bevorzugt werden aliphatische Polyisocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanat, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat), Octandiisocyanate, Nonandiisocyanate (z.B. Trimethyl-HDI (TMDI)), in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI), 3(4)-Isocyanatomethyl-1-methyl-cyclohexylisocyanat (IMCI), Octahydro-4,7-methano-1H-indendimethyldiisocyanat, Norbornendiisocyanat, 5-Isocyanato-1-(isocyanatomethyl)-1,3,3-trimethylcyclohexan, und Ureylenbis(p-phenylenmethylene-p-phenylen)diisocyanat.

Besonders bevorzugte Polyisocyanate sind Hexamethylendiisocyanat (HDI), 3-Isocyanatomethyl-3,5,5-trimethylcyclohexylisocyanat (Isophorondiisocyanat, IPDI), Pentandiisocyanat (PDI), oder Gemische dieser Isocyanate.

Ein ganz besonders bevorzugtes Polyisocyanat ist Hexamethylendiisocyanat (HDI), gegebenenfalls als Biuret, oder Gemische davon.

Ein weiteres bevorzugtes Polyisocyanat ist ein Gemisch aus Hexamethylendiisocyanatoligomer und Isocyanurat.

Noch weiter bevorzugt liegen die Polyisocyanate als Präpolymere (insbesondere als Homopolymere), Biurete (insbesondere als Diisocyanat-Biuret-Oligomerisationsprodukte), Isocyanurate, Iminooxadiazindione, Uretdione und/oder Allophanate vor, die beispielsweise durch Oligomerisierung der hierin beschriebenen difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen. Polyisocyanate im Sinne der vorliegenden Erfindung können auch Mischungen dieser Verbindungen sein. Insbesondere liegen die Polyisocyanate als Biurete oder Mischungen davon vor.

Die geforderte mittlere NCO-Funktionalität von 2 oder größer besteht auch bei erfindungsgemäß geeigneten Präpolymeren, Biureten, Isocyanuraten, Iminooxadiazindionen, Uretdionen und Allophanaten und deren Mischungen. Bevorzugt liegt die mittlere NCO-Funktionalität bei 2,5 bis 5,5, bevorzugter bei 2,7 bis 4 und besonders bevorzugt bei 2,9 bis 3,6.

Geeignete aromatische Polyisocanate sind solche mit aromatisch gebundenen Isocyanatgruppen, wie Diisocyanatobenzole, Toluoldiisocyanate, Diphenyldiisocyanate, Diphenylmethandiisocyanate, Diisocyanatonaphthaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 1,3-Phenylendiisocyanat, 1,4-Phenylendiisocyanat, 2,4-Toluylendiisocyanat, 2,5-Toluylendiisocyanat 2,6-Toluylendiisocyanat, 1,3-Xylylendiisocyanat, 1,4-Xylylendiisocyanat Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, 1,5-Naphthylendiisocyanat, 3,3'-Dimethyl-4,4'-biphenyldiisocyanat, 3,3'-Dimethoxy-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, und 2,2'-Methylen-bis[6-(o-isocyanatobenzyl)phenyl]diisocyanat.

Beispiele für geeignete, kommerziell erhältliche Isocyanate sind Desmodur^{®} N 3900, Desmodur^{®} N 100, Desmodur^{®} N 3200, Desmodur^{®} N 3300, Desmodur^{®} ultra N 3600, Desmodur^{®} N 3700, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} N3500, Desmodur^{®} NZ 300, Desmodur^{®} E 30600, Bayhydur XP 2547, Bayhydur XP 2451/1, Bayhydur Ultra 307 Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 2863 XP, Desmodur^{®} H, Desmodur^{®} VKS 20 F, Desmodur^{®} 44V20I, Desmodur^{®} 44P01, Desmodur^{®} 44V70 L (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (jeweils erhältlich von Vencorex), Basonat HB 100, Basonat HI 100, Basonat HI 100 NG, Basonat HI 2000 NG (jeweils erhältlich von BASF), Takenate 500, Takenate 600, Stabio D-376N (jeweils erhältlich von Mitsui), Duranate 24A-100, Duranate TPA-100, Duranate THA-100 (jeweils erhältlich von Asahi Kasai), Coronate HXR, Coronate HXLV, Coronate HX, und Coronate HK (jeweils erhältlich von Tosoh).

Das mindestens eine Polyisocyanat ist vorzugsweise in einem Anteil von etwa 5 bis etwa 60 Gew.-%, bevorzugt in einem Anteil von etwa 10 bis etwa 50 Gew.-%, bevorzugter in einem Anteil von etwa 15 bis etwa 35 Gew.-%, und noch bevorzugter in einem Anteil von etwa 20 bis etwa 30 Gew.-% bezogen auf das Gesamtgewicht der durch Mischung der Isocyanatkomponente und Aminkomponente erhaltenen Harzmasse enthalten.

In der Isocyanatkomponente ist das mindestens eine Polyisocyanat vorzugsweise in einem Anteil von etwa 10 bis etwa 100 Gew.-%, bevorzugt von etwa 25 bis etwa 60 Gew.-%, bevorzugter von etwa 30 bis etwa 50 Gew.-% bezogen auf das Gesamtgewicht der Isocyanatkomponente enthalten.

Das mindestens eine Polyisocyanat ist in einer besonders bevorzugten Ausführungsform das bzw. die in den Beispielen genannte(n) Polyisocyanat(e), und zwar bevorzugt in den dort genannten Gewichtsanteilen.

### Amine in der Aminkomponente

Die Aminkomponente, welche im Mehrkomponenten-Harzsystem reaktionsinhibierend getrennt von der Isocyanatkomponente vorliegt, umfasst mindestens ein gegenüber Isocyanatgruppen reaktives Amin mit wenigstens zwei Aminogruppen als funktionelle Gruppen.

Erfindungsgemäß weist das Amin eine mittlere NH-Funktionalität von 2 oder größer auf. Die mittlere NH-Funktionalität gibt die Anzahl der an ein Stickstoffatom gebundene Wasserstoffatome in dem Amin an. Demnach weist beispielsweise ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH- Funktionalität kann sich auch nach den Angaben der Anbieter von Aminen richtet, wobei die tatsächlich angegebene NH-Funktionalität von der theoretischen mittleren NH- Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindungen enthaltenen Aminogruppe(n) handelt. Die Aminogruppen können dabei primäre oder sekundäre Aminogruppen sein. Das Amin kann entweder nur primäre oder nur sekundäre Aminogruppen oder sowohl primäre als auch sekundäre Aminogruppen enthalten.

Gemäß einer bevorzugten Ausführungsform ist das gegenüber Isocyanat-Gruppen reaktive Amin aus der aus aliphatischen, araliphatischen und aromatischen Aminen bestehenden Gruppe ausgewählt. Besonders bevorzugt ist das reaktive Amin aus der aus aliphatischen und aromatischen Aminen bestehenden Gruppe ausgewählt. Generell können auch Mischungen verschiedener Amine verwendet werden.

Gegenüber Isocyanatgruppen reaktive Amine sind dem Fachmann grundsätzlich bekannt. Beispiele für gegenüber Isocyanatgruppen reaktive geeignete Amine sind im Folgenden angegeben, ohne jedoch den Umfang der Erfindung einzuschränken. Diese können sowohl einzeln als auch in beliebigen Mischungen untereinander verwendet werden. Beispiele für geeignete Amine sind: 1,2-Diaminoethan(ethylendiamin), 1,2-Propandiamin, 1,3- Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 3,3'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02'6]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-Tetramethylpiperidin-4-yl)propan-1,3-diamin, 2-Methylpentandiamin (DYTEK A), N-Ethylaminopiperazin (N-EAP), N-Aminoethyl-piperazin (N-AEP), 2,4,6-Tri(propan-2-yl)benzol-1,3-diamin, 4-Ethyl-2,6-di(propan-2-yl)benzol-1,3-diamin, 4-Methyl-2,6-di(propan-2-yl)benzol-1,3-diamin, 2,5-Bis(methylsulfonyl)-1,4-benzoldiamin, 5-Chloro-4,6-diethyl-2-methyl-1,3-benzoldiamin, 5-Chloro-4,6-diethyl-6-methyl-1,3-benzoldiamin, 4-Fluoro-5-(1-methylethyl)-1,2-benzoldiamin, und 2,4,6-Trimethyl-5-nitro-1,3-benzoldiamin.

Auch Amidoamine, Polyamidoamine, Polyamidoimidazoline, Polycycloaliphatische Amine, modifizierte Amidoamine, Polyamide, Mannich Basen und Polycarbamide eignen sich als Amin-Komponente. Beispiele für geeignete, kommerziell erhältliche Amine sind Aradur^{®} 115-2, Aradur^{®} 125-2, Aradur@ 140-2, Aradur@ 223, Aradur@ 283, Aradur@ 350, Aradur@ 360, Aradur@ 33225, Aradur@ 450, Aradur^{®} 955-2, Aradur@ 3282-1, Aradur@ 3376, Aradur@ 9130, Aradur@ 9140 (jeweils erhältlich von Huntsman), Ancamide^{®} 260A, Ancamide^{®} 500, Ancamide^{®} 503, Ancamide^{®} 506, Ancamide^{®} 700B75, Ancamide^{®} 910, Ancamide^{®} 2050, Ancamine^{®} 2167 Ancamide^{®} 2353, Ancamide^{®} 2386, Ancamide^{®} 2426, Ancamide^{®} 2443, Ancamide^{®} 2445, Ancamide^{®} 2573, Ancamide^{®} 2634, Ancamide^{®} 2652, Ancamide^{®} 2769, Ancamide^{®} 3011 Ancamide^{®} 3030, Ancamide^{®} 3200, Ancamide^{®} 3419, Ancamide^{®} 3444, Ancamide^{®} 3622, Ancamine^{®} 2759, Ancamine^{®} 2760, Ancamine^{®} 3456, Ancamine^{®} 1618, Ancamine^{®} 1769, Ancamine^{®} 2165, Ancamine^{®} 2280, Ancamine^{®} 2410, Ancamine^{®} 2422, Ancamine^{®} 2432, Ancamine^{®} 2519, Ancamine^{®} 2609W, Ancamine^{®} 2672, Ancamine^{®} 2686, Ancamine^{®} 2692, Ancamine^{®} 2712M, Ancamine^{®} 2719, Ancamine^{®} 2726, Ancamine^{®} 2728, Ancamine^{®} 2739, Ancamine^{®} 2802, Ancamine^{®} 2806, Ancamine^{®} 3215 und Amicure^{®} IC-322 (jeweils erhältlich von Evonik), Epilox^{®}-Härter H 14-50, Epilox^{®}-Härter H 14-51, Epilox^{®}-Härter M 1190, Epilox^{®}-Härter H15-15, Epilox^{®}-Härter H15-25, Epilox^{®}-Härter H15-40, Epilox^{®}-Härter H15-50, Epilox^{®}-Härter H15-60, Epilox^{®}-Härter M1148 (jeweils erhältlich von Leuna Harze), EPIKURE Curing Agent 3010, EPIKURE Curing Agent 3015, EPIKURE Curing Agent 3030, EPIKURE Curing Agent 3046, EPIKURE Curing Agent 3050, EPIKURE Curing Agent 3055, EPIKURE Curing Agent 3061, EPIKURE Curing Agent 3072, EPIKURE Curing Agent 3090, EPIKURE Curing Agent F205, EPIKURE Curing Agent 3100-ET-60, EPIKURE Curing Agent 3115, EPIKURE Curing Agent 3125, EPIKURE Curing Agent 3140, EPIKURE Curing Agent 3155, EPIKURE Curing Agent 3164, EPIKURE Curing Agent 3175 und EPIKURE Curing Agent 3180-F-75 (jeweils erhältlich von Westlake).

Besonders bevorzugte Amine sind Diethylmethylbenzoldiamin (DETDA), 2,4-Diamino-3,5-dimethylthiotoluol (Dimethylthio-toluoldiamin, DMTDA), 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1 ,3-diamin (Ethacure 300), 4,4'-Methylenbis(2,6-diethylanilin), 4,4'-Methylenbis(N-sec-butylcyclohexanamin) (Clearlink 1000), 3,3'-Diaminodiphenylsulfon (33Dapson), 4,4'-Diaminodiphenylsulfon (44Dapson), N,N'-Di-sec-butyl-p-phenylenediamin und 2,4,6-Trimethyl-m-phenylenediamin, 4,4'-methylenebis(N-(1-methylpropyl)-3,3'-dimethylcyclohexanamine (Clearlink 3000), das Reaktionsprodukt von 2- Propenenitril mit 3-Amino-1,5,5-trimethylcyclohexanmethanamin (Jefflink 745) und 3-((3-(((2-Cyanoethyl)amino)methyl)-3,5,5-trimethylcyclohexyl)amino)propiononitrile (Jefflink 136 oder Baxxodur PC136), 2,4,6-Trimethyl-m-phenylenediamine, 4,4'-Methylenebis(2,6-diethylaniline) (MBDA), 4,4'-Methylene-bis[N-(1-methylpropyl)-phenylamine] (Unilink 4200), N,N'-Di-sec-butyl-p-phenylenediamine (Unilink 4100), ein Gemisch aus DETDA und IPDA (Ethacure 270), ein Gemisch aus 4,4'-Methylenebis(N-sec-butylaniline), 4,4'-Methylenebis(2,6-diethylaniline) und Diethylmethylbenzoldiamin (Ethacure 520), 4,4'-Methylenebis(3-chloro-2,6-diethylaniline) (MBCDA), Chlorodiethylmethylbenzenediamine, Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Härter H 14-50, Epilox^{®}-Härter H15-60, Epilox^{®}-Härter M1148, EPIKURE Curing Agent 3050, und EPIKURE Curing Agent F205.

Ganz besonders bevorzugte Amine sind 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), Diethylmethylbenzoldiamin (DETDA), 4,4'-Methylene-bis[N-(1-methylpropyl)-phenylamine] (Unilink 4200), 4,4'-Methylenebis(3-chloro-2,6-diethylaniline) (MBCDA), 4,4'-Methylenebis(2,6-diethylaniline) (MBDA), Chlorodiethylmethylbenzenediamine, Aradur^{®} 33225, Ancamide^{®} 3419, und Epilox^{®}-Härter H 14-50.

In einer weiteren bevorzugten Ausführungsform enthält die Aminkomponente das gegenüber Isocyanatgruppen reaktive Amin Diethyltoluoldiamin (DETDA) und zusätzlich ein weiteres der hierin genannten gegenüber Isocyanatgruppen reaktiven Amine.

In einer weiteren Ausführungsform umfasst die Aminkomponente als Amine Diethyltoluoldiamin (DETDA) und ein Isomerengemisch aus 6-Methyl-2,4-bis(methylthio)phenylen-1,3-diamin und 2-Methyl-4,6-bis(methylthio)phenylen-1,3-diamin (DMTDA). In dieser Ausführungsform liegen das DMTDA und das DETDA in einem Mengenverhältnis (DMTDA:DETDA) von etwa 17:1 bis etwa 1:1 (w/w) vor. Bevorzugt beträgt das Mengenverhältnis (DMTDA:DETDA) von etwa 15:1 bis etwa 1.1 (w/w), bevorzugter von etwa 12:1 bis etwa 1,5:1 (w/w), bevorzugter von etwa 10:1 bis etwa 1,5:1 (w/w), noch bevorzugter von etwa 6:1 bis etwa 1,5:1 (w/w).

Sollte ein weiteres gegenüber Isocyanatgruppen reaktives Amin neben dem DETDA und DMTDA in der Aminkomponente (B) enthalten sein, so beträgt sein Anteil an der Gesamtmenge der Amine in der Komponente (B) maximal etwa 80 Gew.-%, bevorzugt maximal etwa 50 Gew.-%, bevorzugter maximal etwa 20 Gew.-%, noch bevorzugter maximal etwa 5 Gew.-% der Gesamtmenge der Amine.

Die Gesamtmenge an Aminen (einschließlich gegebenenfalls DMTDA und DETDA) in der der durch Mischung der Komponenten (A) und (B) erhaltenen Harzmasse beträgt vorzugsweise von etwa 3 bis etwa 30 Gew.-%, bevorzugter von etwa 5 bis etwa 25 Gew.-%, und noch bevorzugter von etwa 10 bis etwa 20 Gew.-% bezogen auf das Gesamtgewicht der durch Mischung der Komponenten (A) und (B) erhaltenen Harzmasse.

In der Aminkomponente ist das mindestens eine Amin (gegebenenfalls einschließlich DMTDA und DETDA) vorzugsweise in einem Anteil von 20 bis 100 Gew.-%, bevorzugt in einem Anteil von 30 bis 70 Gew.-% und noch bevorzugter in einem Anteil von 35 bis 70 Gew.-% bezogen auf das Gesamtgewicht der Aminkomponente enthalten.

Das mindestens eine reaktive Amin ist in einer besonders bevorzugten Ausführungsform das bzw. die in den Beispielen genannte(n) reaktive(n) Amine(e), und zwar bevorzugt in den dort genannten Gewichtsanteilen.

### Mengenverhältnisse Isocyanatkomponente zu Aminkomponente

Die Mengenverhältnisse der Isocyanatkomponente und der Aminkomponente des Mehrkomponenten-Harzsystems werden bevorzugt so gewählt, dass das numerische Verhältnis von mittlerer NCO-Funktionalität in der Isocyanatkomponente zu mittlerer NH-Funktionalität in der Aminkomponente von 0,3 bis 2,0, bevorzugt von 0,7 bis 1,8, weiter bevorzugt von 1,0 bis 1,5, und am meisten bevorzugt von 1,0 bis 1,3 beträgt.

Durch Variation dieses Mengenverhältnisses kann beispielsweise die Aushärtedauer beeinflusst werden.

### Weichmacher

Das erfindungsgemäße Mehrkomponenten-Harzsystem ist dadurch gekennzeichnet, dass es mindestens einen Weichmacher enthält.

Von den in der vorliegenden Erfindung verwendeten Weichmachern sind Alkantrisäurebasierte Weichmacher, beispielsweise Citrate, die mindestens eine freie Hydroxylgruppe enthalten, ausgenommen.

Weichmacher sind dem Fachmann grundsätzlich bekannt und kommerziell erhältlich.

Bevorzugt ist der mindestens eine Weichmacher ausgewählt aus der Gruppe bestehend aus Alkandicarbonsäure-basierten Weichmachern, Alkendicarbonsäure-basierten Weichmachern, Cyclohexandisäure-basierten Weichmachern, Phthalsäure-basierten Weichmachern, Trimellithsäure-basierten Weichmachern, und Methyl-O-acetylricinoleat.

Besonders bevorzugt ist der mindestens eine Weichmacher ausgewählt aus der Gruppe bestehend aus C₃- bis C₁₀- Alkandicarbonsäure-basierten Weichmachern.

Ganz besonders bevorzugt ist der mindestens eine Weichmacher ausgewählt aus der Gruppe bestehend aus Diethylmalonat, Diethyladipat, Diisobutyladipat, Bis(2-ethylhexyl)adipat, Diisononyladipat, Triethyl-O-acetylcitrat, Diethylfumarat, 1,2-Cyclohexandicarbonsäurediisononylester, Diisononylphthalat, Tris(2-ethylhexyl)trimellitat, und Methyl-O-acetylricinoleat und Mischungen von zwei oder mehr davon.

Am meisten bevorzugt ist der Weichmacher Diethylmalonat, Diethylfumarat oder Diethyladipat.

In einer Ausführungsform des hierin beschriebenen Mehrkomponenten-Harzsystems enthält das Mehrkomponenten-Harzsystem von 1,0 Gew.-% bis 4,0 Gew.-%, vorzugsweise von 1,2 Gew.-% bis 3,5 Gew.-%, besonders bevorzugt von 1,4 Gew.-% bis 3,3 Gew.-% des mindestens einen Weichmachers, weiter bevorzugt von 1,5 Gew.-% bis 2,5 Gew.-% des mindestens einen Weichmachers.

In einer bevorzugten Ausführungsform des hierin beschriebenen Mehrkomponenten-Harzsystems enthält das Mehrkomponenten-Harzsystem von 1,5 Gew.-% bis 2,5 Gew.-% des Weichmachers Diethylmalonat, Diethylfumarat oder Diethyladipat.

Der mindestens eine Weichmacher ist in einer besonders bevorzugten Ausführungsform das bzw. die in den Beispielen genannte(n) Weichmacher, und zwar bevorzugt in den dort genannten Gewichtsanteilen.

### Füllstoffe - Molekularsieb

Erfindungsgemäß enthält das Mehrkomponenten-Harzsystem ein Molekularsieb, insbesondere einen Zeolith als Füllstoff, zur Erhöhung der Leistungsfähigkeit (Auszugswerte) des Mehrkomponenten-Harzsystems.

Zeolithe sind dem Fachmann grundsätzlich bekannt und kommerziell erhältlich.

Die in der vorliegenden Erfindung verwendete Zeolithe können synthetische oder natürliche Zeolithe sein und werden im allgemeinen durch die Zusammensetzung Mⁿ⁺_{x/n} [(AlO₂)⁻ₓ(SiO₂)_{y}]·zH₂O worin N die Ladung von M ist, meist 1 oder 2, und M ein Kation eines Alkali- oder Erdalkalimetalls, insbesondere Na⁺, K⁺, Ca²⁺ und Mg²⁺ ist, charakterisiert.

Als Zeolithe können folgende verwendet werden:
Zeolith A (Na₁₂((AlO₂)₁₂(SiO₂)₁₂) · 27 H₂O; K₁₂((AlO₂)₁₂(SiO₂)₁₂) · 27 H₂O),
Zeolith X (Na₈₆[(AlO₂)₈₆(SiO₂)₁₀₆] · 264 H₂O),
Zeolith Y (Na₅₆[(AlO₂)₅₆(SiO₂)₁₃₆] · 250 H₂O),
Zeolith L (K₉[(AlO₂)₉(SiO₂)₂₇] · 22 H₂O),
Modernit (Na_{8,7}[(AlO₂)_{8,7}(SiO₂)_{39,3}] · 24 H₂O),
Zeolith ZSM 5 (Na_{0,3}H_{3,8}[(AlO₂)_{4,1}(SiO₂)_{91,9}]),
Zeolith ZSM 11 (Na_{0,1}H_{1,7}[(AlO₂)_{1,8}(SiO₂)_{94,2}]). Davon sind Zeolith A, Zeolith X, Zeolith Y und Zeolith ZSM 5 und Zeolith ZSM 11 bevorzugt.

Das Molekularsieb, insbesondere der Zeolith kann als Pulver, Granulat oder als Paste (beispielsweise 48-50% Pulver in Rizinusöl dispergiert) eingesetzt werden.

Der synthetische Zeolith ist bevorzugt ein synthetischer Zeolith umfassend Teilchen mit einer Partikelgröße von bis zu 250 µm, insbesondere 5 µm bis 24 µm. Besonders bevorzugt weist der synthetische Zeolith eine Porengröße von etwa 5 Å bis etwa 10 Å, insbesondere etwa 3 Å bis etwa 4 Å auf.

Die Spezifische Oberfläche (BET) der Zeolithpartikel liegt bevorzugt zwischen 800 m²/g und 1000 m²/g.

Der Restwassergehalt des Zeoliths liegt unter 2,5 % w/w, bevorzugt unter 1,5% w/w, und die Wasserabsorptionskapazität liegt unter 22 - 24% w/w.

Es ist möglich, eine Mischung aus zwei oder mehreren unterschiedlichen Zeolithtypen zu verwenden.

Das Molekularsieb, insbesondere der Zeolith, wird bevorzugt in einer Menge von 0,1 bis 60 Gew.-%, besonders bevorzugt in einer Menge von 1 bis 35 Gew.-% und ganz besonders bevorzugt in einer Menge von 2 bis 5 Gew.-%, bezogen auf das Gesamtgewicht des Mehrkomponenten-Harzsystems, eingesetzt.

Durch die Verwendung des Molekularsiebes kann die Leistungsfähigkeit (Lastniveau) einer ausgehärteten chemischen Dübelmasse auf Isocyanat-Amin-Basis um 5 bis 10% gesteigert werden, verglichen mit eine Dübelmasse, welche kein Molekularsieb enthält.

Das Molekularsieb kann in einer der beiden Komponenten des Mehrkomponenten-Harzsystems oder in beiden Komponenten enthalten sein.

Das Molekularsieb kann auch als Trocknungsmittel für die Isocyanatkomponente dienen und kann so die Lagerstabilität der Isocyanatkomponente und damit eines Mehrkomponenten-Harzsystems, welches die Isocyanatkomponente umfasst, verbessern.

Wird das Molekularsieb als Trocknungsmittel eingesetzt, so enthält die Isocyanatkomponente das Molekularsieb oder zumindest einen Teil davon, wobei die Mindestmenge, in der das Molekularsieb in der Isocyanatkomponente enthalten ist, 3 Gew.-%, bezogen auf das Gewicht der Isocyanatkomponente, beträgt. Insbesondere ist im Fall einer angestrebten zusätzlichen Erhöhung der Lagerstabilität das Molekularsieb in einer Menge von 3 Gew.-% bis 35 Gew.-%, bevorzugt 3 Gew.-% bis 20 Gew.-%, und besonders bevorzugt 3 Gew.-% bis 5 Gew.-%, jeweils bezogen auf das Gewicht der Isocyanatkomponente, in der Isocyanatkomponente enthalten.

### Füllstoffe - anorganische Füllstoffe und Rheologieadditive

Neben dem Molekularsieb enthält erfindungsgemäß die Isocyanatkomponente und/oder die Aminkomponente mindestens einen Füllstoff und mindestens ein Rheologieadditiv, wobei es erfindungswesentlich ist, dass zumindest eine der beiden Komponenten sowohl einen Füllstoff als auch ein Rheologieadditiv enthält. Es ist bevorzugt, dass sowohl die Isocyanatkomponente als auch die Aminkomponente jeweils mindestens einen Füllstoff als auch mindestens ein Rheologieadditiv enthalten.

Füllstoffe und Rheologieadditive sind dem Fachmann grundsätzlich bekannt und kommerziell erhältlich.

Der Gesamtfüllgrad einer Mörtelmasse, einschließlich des Molekularsiebes, hergestellt durch Vermischen der Isocyanatkomponente und der Aminkomponente des Mehrkomponenten-Harzsystems liegt erfindungsgemäß in einem Bereich von 30 bis 80 Gew.-% bezogen auf das Gesamtgewicht der Mörtelmasse, bevorzugt in einem Bereich von 35 bis 65 Gew.-%, noch bevorzugter in einem Bereich von 35 bis 60 Gew.-%. Der Gesamtfüllgrad der Mörtelmasse bezieht sich auf den gewichtsprozentualen Anteil an Füllstoff, einschließlich des Molekularsiebes, und Rheologieadditiv bezogen auf das Gesamtgewicht der Isocyanatkomponente und der Aminkomponente. In einer bevorzugten Ausführungsform beträgt der Füllgrad der Isocyanatkomponente bis 80 Gew.-%, bevorzugt von 10 bis 70 Gew.-%, weiter bevorzugt von 35 bis 65 Gew.-% bezogen auf das Gesamtgewicht der Isocyanatkomponente. Der Füllgrad der Aminkomponente beträgt vorzugsweise bis 80 Gew.-%, bevorzugt von 10 bis 70 Gew.-%, weiter bevorzugt von 35 bis 65 Gew.-%, jeweils bezogen auf das Gesamtgewicht der Aminkomponente.

Als Füllstoffe dienen bevorzugt anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden. Als Füllstoffe kommen insbesondere nicht oberflächenbehandelte Quarzmehle, Feinquarzmehle und Feinstquarzmehle, wie beispielsweise Millisil^{®} W3, Millisil^{®} W6, Millisil^{®} W8 und Millisil^{®} W12, bevorzugt Millisil^{®} W12, in Frage. Ferner können silanisierte Quarzmehle, Feinquarzmehle und Feinstquarzmehl eingesetzt werden. Diese sind beispielsweils käuflich unter der Produktserie Silbond^{®} der Firma Quarzwerke erhältlich. Hierbei sind die Produktserien Silbond^{®} EST (Epoxysilan-modifiziert) und Silbond^{®} AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, (d50 = 0,3 µm) oder Qualitäten wie DAW oder DAM mit den Typenbezeichnungen 45 (d50 < 0,44 µm), 07 (d50 > 8,4µm), 05 (d50 < 5,5 µm), 03 (d50 < 4,1µm). Weiterhin können die oberflächenbehandelte Fein- und Feinstfüllstoffe vom Typ Aktisil AM (aminosilanbehandelt, d50 = 2,2 µm) und Aktisil EM (epoxysilanbehandelt, d50=2,2 µm) von Hoffman Mineral verwendet werden.

Die Füllstoffe können einzeln oder auch in beliebiger Mischung untereinander verwendet werden.

Die Einstellung der Fließeigenschaften erfolgt über den Zusatz von Rheologieadditiven, welche erfindungsgemäß in der Isocyanatkomponente und/oder der Aminkomponente verwendet werden Geeignete Rheologieadditive sind: Schichtsilikate wie Laponite, Bentone oder Montmorillonit, Neuburger Kieselerde, pyrogene Kieselsäuren, Polysaccharide; Polyacrylat-, Polyurethan- oder Polyharnstoffverdicker sowie Celluloseester. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Der Anteil eines oder mehrerer Rheologieadditive in der Isocyanatkomponente liegt vorzugsweise bei 0,1 bis 3 Gew.-%, bevorzugt bei 0,1 bis 1,5 Gew.-% bezogen auf das Gesamtgewicht der Isocyanatkomponente. Der Anteil eines oder mehrerer Rheologieadditive in der Aminkomponente liegt vorzugsweise bei 0,1 bis 5 Gew.-%, bevorzugt bei 0,5 bis 3 Gew.-% bezogen auf das Gesamtgewicht der Aminkomponente.

Besonders bevorzugt sind die in den Beispielen verwendeten Füllstoffe, Füllstoffmischungen, und Rheologieadditive, insbesondere in den dort beschriebenen Mengen und Mengenverhältnissen.

### Haftvermittler - Silane

In einer Ausführungsform des Mehrkomponenten-Harzsystems enthält die Isocyanatkomponente und/oder die Aminkomponente mindestens ein Silan als Haftvermittler.

Durch den Einsatz eines Silans wird die Vernetzung der Bohrlochwand mit der Mörtelmasse verbessert, so dass sich die Haftung im ausgehärteten Zustand erhöht.

Silane sind dem Fachmann grundsätzlich bekannt und kommerziell erhältlich.

Geeignete Haftvermittler sind aus der Gruppe der Silane ausgewählt, die mindestens eine Si-gebundene hydrolysierbare Gruppe aufweisen. Dabei ist es nicht erforderlich, dass das Silan neben der Si-gebundenen hydrolysierbaren Gruppe eine weitere funktionelle Gruppe aufweist, wie etwa eine Isocyanatgruppe oder eine Aminogruppe. Dennoch kann das Silan neben der Si-gebundenen hydrolysierbaren Gruppe eine oder mehrere gleiche oder unterschiedliche weitere funktionelle(n) Gruppe aufweisen, wie etwa eine Amino-, Mercapto-, Epoxy-, Isocyanato-, Alkenyl-, (Meth)acryloyl-, Anhydrido-oder Vinyl-Gruppe. Die Si-gebundene hydrolysierbare Gruppe ist bevorzugt eine C₁-C₇-Alkoxy-Gruppe und ganz besonders bevorzugt, eine Methoxy- oder Ethoxygruppe.

Bevorzugte Beispiele für geeignete monofunktionale Silane sind: Isobutyltriethoxysilane, Isobutyltrimethoxysilane, Isobutylmethyldimethoxysilane, n-propyltriethoxysilane, n-propyltrimethoxysilane, Phenyltrimethoxysilane, und Ethyltrimethoxysilane.

Bevorzugte Beispiele für geeignete bifunktionale Silane sind: Vinyltrimethoxysilane, Vinyltriethoxysilane, Vinylmethyldiethoxysilane, Vinyltriacetoxysilane, Vinyltriisopropenoxysilane, und Vinyltriisopropoxysilane.

Besonders bevorzugte geeignete bifunktionale Silane sind: 3-Glycidoxypropylmethyldiethoxysilane, Glycidoxypropylmethyldimethoxysilane, Methacryloxypropyltriethoxysilane, Methacryloxymethyltrimethoxysilane, Methacryloxymethylmethyldiethoxysilane, Methacryloxymethyltriethoxysilane, Methaxryloxymethyltris(trimethylsiloxy)-silane, 3-Methacryloxypropylbis(trimethylsiloxy)methylsilane, Isocyanatomethylmethyldimethoxysilane, 3-Isocyanatopropyltriethoxysilane, 3-Aminopropyltrimethoxysilane, 3-Aminopropyltriethoxysilane, und 3-Aminopropylmethyldiethoxysilane.

Noch weiter bevorzugte bifunktionale Silane sind: Methacryloxymethyltrimethoxysilane, 3-Glycidyloxypropyltrimethoxysilane und Glycidoxyylpropyltriethoxysilane.

Bevorzugte Beispiele für oligomere Siloxane enthalten neben an Si-gebundene hydrolysierbare Gruppen noch weitere funktionelle Gruppen wie Epoxy-, Amino-, Methacrylatgruppen.

In einer bevorzugten Ausführungsform enthält vorzugsweise die Isocyanatkomponente und gegebenenfalls die Aminkomponente des hierin beschriebenen Mehrkomponenten-Harzsystems als weiteren Bestandteil ein Silan, das vorzugsweise aus der Gruppe bestehend aus 3-Aminopropyltrialkoxysilanen, 3-Glycidyloxyalkyltrialkoxysilanen, Bis-(3-trialkoxysilylpropyl)aminen, 3-Mercaptopropyltrialkoxysilanen, 3-(Meth)acryloxyalkyltrialkoxysilanen, Alkenylalkoxysilanen, Tetraalkoxysilanen, Trialkoxyalkylsilanen und Gemischen von zwei oder mehr davon ausgewählt ist.

In einer am meisten bevorzugten Ausführungsform enthält vorzugsweise die Isocyanatkomponente und gegebenenfalls die Aminkomponente des hierin beschriebenen Mehrkomponenten-Harzsystems ein Silan ausgewählt aus der Gruppe aus 3-Glycidyloxypropyltrimethoxysilan, 3-(Meth)acryloylpropyltrimethoxysilan, Vinyltrimethoxysilan und Vinylethoxysilan, vorzugsweise 3-Glycidyloxypropyltrimethoxysilan.

Beispiele für geeignete, kommerziell erhältliche Silane sind Dynasylan^{®} MEMO, Dynasylan^{®} AMEO, Dynasylan^{®} AMMO, Dynasylan^{®} GLYMO, Dynasylan^{®} GYLEO, Dynasylan^{®} VTEO, Dynasylan^{®} VTMO, Dynasylan^{®} VPS4721 (jeweils erhältlich von Evonik), und CoatOSil* MP 200 (Momentive).

### Weitere optionale Bestandteile

In einer Ausführungsform kann/können die Isocyanatkomponente, die Aminkomponente oder beide Komponenten mindestens einen Verdicker enthalten.

Geeignete Verdicker sind gegebenenfalls organisch nachbehandelte pyrogene Kieselsäure, Bentonite, Alkyl- und Methylcellulosen und Rhizinusölderivate, oder Gemische von zwei oder mehreren davon. Besonders bevorzugt ist organisch nachbehandelte pyrogene Kieselsäure.

In einer bevorzugten Ausführungsform umfasst die Komponente (A) und/oder Komponente (B) eines erfindungsgemäßen Mehrkomponenten-Harzsystems Quarzmehl und/oder -sand und Kieselsäure.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

### Bevorzugte Ausführungsformen

In einer bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und als Weichmacher Diethylmalonat, Diethylfumarat oder Diethyladipat, und Mischungen von zwei oder mehr davon, vorzugsweise Diethylmalonat oder Diethylfumarat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA) und Diethyltoluoldiamin (DETDA), und als Weichmacher Diethylmalonat, Diethylfumarat oder Diethyladipat, und Mischungen von zwei oder mehr davon, vorzugsweise Diethylmalonat oder Diethylfumarat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und als Weichmacher Diethylmalonat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin, und Diethyltoluoldiamin (DETDA), und als Weichmacher Diethylmalonat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und als Weichmacher Diethylfumarat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und Diethyltoluoldiamin (DETDA), und als Weichmacher Diethylfumarat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und als Weichmacher Diethyladipat.

In einer weiteren bevorzugten Ausführungsform enthält das erfindungsgemäße Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin (DMTDA), und Diethyltoluoldiamin (DETDA), und als Weichmacher Diethyladipat.

### Mörtelmasse

Ein weiterer Gegenstand der Erfindung ist eine Mörtelmasse, welche durch Vermischen der Isocyanatkomponente, der Aminkomponente, eines Molekularsiebs, mindestens eines Weichmachers, gegebenenfalls eines Silans, wie hierin definiert und gegebenenfalls Diethyltoluoldiamin (DETDA) hergestellt wird.

### Verwendung

Ein weiterer Gegenstand der vorliegenden Erfindung ist die Verwendung des hierin beschriebenen erfindungsgemäßen Mehrkomponenten-Harzsystems oder einer hierin beschriebenen Mörtelmasse zur chemischen Befestigung von Konstruktionselementen in mineralischen Untergründen oder in Holz vorzugsweise in Bohrlöchern.

Das erfindungsgemäße Mehrkomponenten-Harzsystem eignet sich insbesondere als chemischer Dübel zur chemischen Befestigung von Konstruktionselementen wie Ankergewindestangen, Bewehrungseisen, Gewindehülsen und Schrauben in Vertiefungen, insbesondere (Bohr)löchern und Spalten, die in einen für Bauwerke typischen Untergrund eingebracht sind.

Daneben eignet sich das erfindungsgemäße Mehrkomponenten-Harzsystem auch als Klebstoff.

Das Mehrkomponenten-Harzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Isocyanatkomponente und die Aminkomponente reaktionsinhibierend voneinander getrennt angeordnet sind.

Bei der Verwendung des Mehrkomponenten-Harzsystems werden die Isocyanatkomponente und die Aminkomponente aus den getrennten Kammern entleert, und in einer geeigneten Vorrichtung, beispielsweise einem Statikmischer oder einem Dissolver, gemischt, woraus eine Harzmasse resultiert.

Bei der Verwendung als "chemischer Dübel" zur chemischen Befestigung erfolgt die Mischung direkt vor oder in einem Loch (bevorzugt einem Bohrloch) oder Spalt und die resultierende Harzmasse wird danach mittels einer bekannten Injektionsvorrichtung in das (ggf. zuvor gereinigte) Loch bzw. den Spalt eingebracht. Anschließend wird das zu fixierende Bauteil in die Harzmasse, welche hier bevorzugt eine Mörtelmasse ist, eingesetzt und justiert. Anschließend härtet die Masse aus.

Bei der Verwendung als Klebstoff wird die Harzmasse auf geeignete Art und Weise (Statikmischer, händisches Verrühren) gemischt und anschließend auf die zu verklebenden Teile bzw. auf den zu beschichtenden Untergrund aufgetragen.

Die Amine der Aminkomponente reagieren mit den Isocyanatgruppen der Isocyanatkomponente, so dass die Harzmasse unter Umgebungsbedingungen, etwa an der Baustelle, innerhalb einer gewünschten Zeit aushärtet. Diese chemische Reaktion ist von der Temperatur, der Feuchtigkeit in Umgebung und Untergrund, der chemischen Zusammensetzung des Untergrunds, sowie von den eingesetzten Bestandteilen der Komponenten (A) und (B) abhängig. Umgebungsbedingungen können variieren, wie z.B. niedrige Temperaturen (z.B. - 5°C) während der Nacht.

Ein erfindungsgemäßes Mehrkomponenten-Harzsystem wird bevorzugt für Bauzwecke eingesetzt. Der Begriff "für Bauzwecke" bedeutet das Baukleben sowie das Beschichten, und die Verwendung des Mehrkomponenten-Harzsystems als chemischer Anker.

Der Einsatz erfolgt insbesondere auf bzw. in Ziegel, Beton, Gestein oder anderen mineralischen Untergründen, Stahl oder Holz.

Die Verwendung als chemischer Dübel erfolgt insbesondere für die chemische Befestigung von Konstruktionselementen und Verankerungsmitteln, wie Anker(gewinde)stangen, Ankerbolzen, (Gewinde)stangen, (Gewinde)hülsen, Verstärkungseisen, Schrauben und dergleichen, in (Bohr)löchern oder Spalten in verschiedenen Untergründen, wie Mauerwerk, Beton, Ziegel, anderen mineralischen Materialien, Metallen (z.B. Stahl), Keramiken, Kunststoffen, Glas und Holz.

Ganz besonders bevorzugt dient ein erfindungsgemäßes Mehrkomponenten-Harzsystem zur chemischen Befestigung von Verankerungselementen in einem Loch (insbesondere einem Bohrloch) oder Spalt in einem Bausubstrat.
Die Verwendung erfolgt typischerweise bei einer Untergrundtemperatur von etwa -20°C bis etwa 30°C, bevorzugt von etwa -15°C bis etwa 10°C, bevorzugter von etwa -10°C bis etwa 0°C, noch bevorzugter von etwa -10°C bis etwa -5°C.

Für die Verwendung als chemischer Dübel im Baubereich, insbesondere bei großen Bauteilen, hängt die Untergrundtemperatur typischerweise von der Umgebungstemperatur ab.

Außerdem erfolgt die Verwendung als chemischer Dübel typischerweise auf einem in Bauwerken vorkommenden Untergrund wie Stahl, Beton, Holz, Gestein oder Ziegel. Bevorzugt ist der Untergrund Zement, beispielsweise der in den Beispielen verwendete Zement.

Ein weiterer Gegenstand der Erfindung ist daher ein Verfahren zur chemischen Befestigung von Konstruktionselementen in mineralischen Untergründen, vorzugsweise in Bohrlöchern, wobei zur chemischen Befestigung ein hierin beschriebenes Mehrkomponenten-Harzsystem oder eine hierin beschriebene Mörtelmasse verwendet werden.

Ein weiterer Gegenstand der Erfindung ist daher die Verwendung eines Weichmachers in einem Mehrkomponenten-Harzsystem auf Basis von Isocyanat-Amin-Addukten für die chemische Befestigung zur Erhöhung der Auszugsfestigkeit (Verbundspannung) bei niedrigen Temperaturen, insbesondere bei Temperaturen unterhalb von 0°C.

Die Erfindung wird im Folgenden anhand von Ausführungsbeispielen weiter beschrieben, die jedoch nicht in einem einschränkenden Sinn verstanden werden sollen.

### AUSFÜHRUNGSBEISPIELE

### Ausgangsverbindungen

Zur Herstellung des erfindungsgemäßen Mehrkomponenten-Harzsystems (Beispiele A1, A2, A3 und B1) und der Vergleichsbeispiele V1 und V2 wurden die in Tabelle 1 genannten, kommerziell erhältlichen Ausgangsverbindungen verwendet:

**Tabelle 1: Bestandteile der Isocyanatkomponente (Komponente (A)) und der Aminkomponente (Komponente (B))**

| Bezeichnung des Bestandteils | Beschreibung des Bestandteils | **Hersteller** |
|---|---|---|
| Hexamethylen-1,6-diisocyanat Hompolymere | niedrigviskoses, aliphatisches Polyisocyanat-Herz auf Basis Hexamethylendiisocyanat (Equivalentgewicht ca. 179; NCO-Gehalt nach M105-ISO 1190923, **5+-**0,5 Gew.-%, monomeres HDI nach M106-ISO 10283 < 0,25 %; Viskosität (23°C) M014-ISO 3219/A.3 730 +-100 mPas; Desmodur^{®} N 3900) | Covestro AG |
| Hexamethylen-1,6-diisocyanat Biuret Oligomerisationsprodukt | Desmodur^{®} N 3200 | Covestro AG |
| Hexamethylendiisocyanatoligomere/ Isocyanurate | Tolonate^{™} DT-LV LM | Vencorex |
| Mischung aus 6-Methyl-2,4-bis(methylthio)phenylen-1,3-diamin und 2-Methyl-4,6-bis(methylthio)phenylen-1,3-diamin | Ethacure^{®} 300 Curative (Dimethylthiotoluoldiamine 95-97 %, Monomethylthiotoluoldiamin 2-3 %; Equivalentgewicht mit Isocyanaten 107) | Albermale Corporation |
| Diethyltoluoldiamin | Ethacure^{®} 100 Plus | Albermale Corporation |
| 3-Glycidyloxypropyltrimethoxysilan | Dynasylan^{®} GLYMO | Evonik Resource Efficiency GmbH |
| Zeolithpulver | Synthetischer Zeolith; Purmol^{®} 3ST | Zeochem AG |
| Quarzmehl | Millisil^{®} W12 | Quarzwerke Frechen |
| Quarzsand | P10 | Strobel |
| Kieselsäure | Cab-O-Sil^{®} TS-720 | Cabot |
| Diethyladipat | - | TCI |
| Diethylfumarat | - | TCI |
| Diethylmalonat | - | TCI |

### Bestandteile und Herstellung der erfindungsgemäßen Beispiele und der Vergleichsbeispiele

Die Bestandteile der erfindungsgemäß verwendeten Isocyanatkomponente und der Aminkomponente der Beispiele A1, A2, A3 und B1 und der Vergleichsbeispiele V1 und V2, und ihre Anteile in Gew.-% bezogen auf das Gesamtgewicht aus Isocyanatkomponente und Aminkomponente sind in den folgenden Tabellen 2 und 3 angegeben:

**Tabelle 2: Zusammensetzung der Isocyanatkomponente und der Aminkomponente der erfindungsgemäßen Beispiele A1, A2, und A3 und des Vergleichsbeispiels V1**

| **Bestandteil** | **V1** | **A1** | **A2** | **A3** |
|---|---|---|---|---|
| **Isocyanatkomponente** - **Komponente (A)** | | | | |
| Hexamethylen-1,6-diisocyanat Homopolymer (Desmodur N3900) | 21,7 | 2,.2 | 20,2 | 20,2 |
| Hexamethylen-1,6-diisocyanat Biuret Oligomerisationsprodukt (Desmodur N3200) | 3,5 | 3,2 | 3,2 | 3,2 |
| 3-Glycidyloxypropyltrimethoxysilan | 1,7 | 1,7 | 1,7 | 1,7 |
| Diethyladipat | - | 1,5 | - | - |
| Diethylfumarat | - | - | 1,5 | - |
| Diethylmalonat | - | - | - | 1,5 |
| Quarzmehl | 15,5 | 1,3 | 15,3 | 15,3 |
| Quarzsand | 31,8 | 31,4 | 31,5 | 31,5 |
| Kieselsäure | 0,9 | 0,9 | 0,9 | 0,9 |
| Zeolithpulver | 2,3 | 2,3 | 2,3 | 2,3 |

| **Aminkomponente** - **Komponente (B)** | | | | |
|---|---|---|---|---|
| (6-Methyl-2,4-bis(methylthio)phenylen-1,3-diamin / 2-Methyl-4,6-bis(methylthio)phenylen-1,3-diamin (DMTDA) | 11,0 | 10,3 | 10,5 | 10,3 |
| Diethyltoluoldiamin (DETDA) | 1,1 | 1,1 | 0,8 | 1,1 |
| Quarzmehl | 2,3 | 3,2 | 3,2 | 3,2 |
| Quarzsand | 7,8 | 8,5 | 8,5 | 8,5 |
| Kieselsäure | 0,4 | 0,4 | 0,4 | 0,4 |

| **Bestandteil** | **V1** | **A1** | **A2** | **A3** |
|---|---|---|---|---|
| | | | | |
| Volumenmischungsverhältnis | 3:1 | 3:1 | 3:1 | 3:1 |
| Isocyanat:Amin Verhältnis | 1,26:1 | 1,26:1 | 1,26:1 | 1,26:1 |
| Verarbeitungszeit in min:sec | 5:00 | 5:30 | 6:10 | 5:30 |
| Aushärtungszeit in h | 6-8 | 6-8 | - | - |
| Verbundspannung bei -10 °C in N/mm² | 24,9 | 29,5 | 29,9 | 28,7 |

**Tabelle 3: Zusammensetzung der Isocyanatkomponente und der Aminkomponente des erfindungsgemäßen Beispiels B1 und des Vergleichsbeispiels V2**

| **Bestandteil** | **V2** | **B1** |
|---|---|---|
| **Isocyanatkomponente** - **Komponente (A)** | | |
| Hexamethylendiisocyanatoligomere/Isocyanurate (Tolonate HDT-LV LM) | 26,8 | 23,4 |
| 3-Glycidyloxypropyltrimethoxysilan | 1,7 | 1,7 |
| Diethylfumarat | - | 1,5 |
| Quarzmehl | 15,5 | 15,3 |
| Quarzsand | 30,3 | 31,5 |
| Kieselsäure | 0,9 | 0,9 |
| Zeolithpulver | 2,3 | 2,3 |

| **Aminkomponente** - **Komponente (B)** | | |
|---|---|---|
| (6-Methyl-2,4-bis(methylthio)phenylen-1,3-diamin / 2-Methyl-4,6-bis(methylthio)phenylen-1,3-diamin (DMTDA) | 11,6 | 10,5 |
| Diethyltoluoldiamin (DETDA) | 1,1 | 0,8 |
| Quarzmehl | 2,2 | 3,1 |
| Quarzsand | 7,1 | 8,4 |
| Kieselsäure | 0,4 | 0,4 |
| | | |
| Volumenmischungsverhältnis | 3:1 | 3:1 |
| Isocyanat:Amin Verhältnis | 1,27:1 | 1,26:1 |
| Verarbeitungszeit in min:sec | 5:10 | 6:20 |
| Aushärtungszeit in h | 6 | 6 |
| Verbundspannung bei -10 °C in N/mm² | 25,1 | 29,4 |

### Herstellung

Zur Herstellung der Vergleichsmörtelmassen V1 und V2 sowie der erfindungsgemäßen Mörtelmassen A1, A2, A3 und B1 wurden zunächst die Isocyanatkomponenten und die Aminkomponenten jeweils einzeln hergestellt. Dazu wurden die in Tabelle 1 angegebenen Bestandteile zusammengegeben und jeweils in einem Dissolver (Fa. PC Laborsystem GmbH) 8 Minuten bei 3500U/min unter Vakuum (80 mbar) zu einer luftblasenfreien pastösen Masse homogenisiert. Die Massen wurden in Hartkartuschen umgefüllt.

### Bestimmung von Verbundspannungen und Aushärtezeit

Zur Bestimmung der mit den Mörtelmassen erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der erfindungsgemäßen Zweikomponenten-Mörtelmasse in C20/25 Betonplatten eingedübelt wurde. Zur Bestimmung der Verbundspannung wurde nach einer Aushärtezeit von 144 Stunden bei einer Temperatur von -10 °C die Versagenslast durch zentrisches Ausziehen der Ankergewindestange mit enger Abstützung ermittelt. Die mittlere Versagenslast wurde anhand der Ergebnisse von fünf Ankern bestimmt. Durch die Verbundspannungswerte bei Raumtemperatur (Referenzwert nach 24 h) abhängig von der Zeit wird die Aushärtezeit bestimmt.

### Bestimmung der Verarbeitungszeit

Eine hochfeste Gewindeankerstange M10 wurde verwendet, um die Verarbeitungszeiten zu bestimmen, die mit den Mörtelmischungen erreicht werden sollen. Die Zweikomponenten-Mörtelmasse wurde in ein hammergebohrtes Bohrloch mit einem Durchmesser von 12 mm und einer Bohrlochtiefe von 90 mm (+/- 3 mm) injiziert. Die Ankerstange wurde stufenweise (in Schritten von 5 mm alle 10 Sekunden) in das Bohrloch eingedübelt. Die Zeit wird aufgezeichnet, bis die Polymerisation so weit fortgeschritten ist, dass der Ankerstab nicht mehr eingeführt werden kann.

### Ergebnisse

Den Tabellen 2 und 3 ist zu entnehmen, dass durch Zugabe von 1,5 Gew.-% des Weichmachers Diethyladipat (Beispiel A1), Diethylfumarat (Beispiele A2 und B1) oder Diethylmalonat (Beispiel A3) zu den erfindungsgemäßen Mörtelmassen eine deutlich bessere Verbundspannung bei -10 °C im Vergleich zu den Vergleichsbeispielen V1 bzw. V2 ohne Weichmacher erreicht wird. Die Verbundspannung der erfindungsgemäßen Mörtelmassen mit Weichmacher ist bei -10 °C um 15% bis 20% höher als bei herkömmlichen Mörtelmassen ohne Weichmacher. Die Aushärtezeit bleibt dabei unverändert.

## Patentansprüche

1. Mehrkomponenten-Harzsystem enthaltend
eine Isocyanatkomponente, die mindestens ein aliphatisches und/oder aromatisches Polyisocyanat mit einer mittleren NCO-Funktionalität von 2 oder größer umfasst, und
eine Aminkomponente, die mindestens ein gegenüber Isocyanatgruppen reaktives Amin mit einer mittleren NH-Funktionalität von 2 oder größer umfasst,
mit der Maßgabe, dass das Mehrkomponenten-Harzsystem frei von Polyasparaginsäureestern ist,
wobei die Isocyanatkomponente und/oder die Aminkomponente mindestens einen Füllstoff sowie mindestens ein Rheologieadditiv umfasst,
und der Gesamtfüllgrad einer Mörtelmasse hergestellt durch Vermischen der Isocyanatkomponente und der Aminkomponente in einem Bereich von 30 bis 70 % liegt,
wobei die Isocyanatkomponente und gegebenenfalls die Aminkomponente ein Molekularsieb enthält,
**dadurch gekennzeichnet, dass** die Isocyanatkomponente mindestens einen Weichmacher enthält.

2. Mehrkomponenten-Harzsystem nach Anspruch 1, wobei der mindestens eine Weichmacher ausgewählt ist aus der Gruppe bestehend aus Alkandicarbonsäure-basierten Weichmachern, Alkendicarbonsäure-basierten Weichmachern, Cyclohexandisäure-basierten Weichmachern, Phthalsäure-basierten Weichmachern, Trimellithsäure-basierten Weichmachern, und Methyl-O-acetylricinoleat.

3. Mehrkomponenten-Harzsystem nach Anspruch 1 oder 2, wobei der mindestens eine Weichmacher ausgewählt ist aus der Gruppe bestehend aus C₃- bis C₁₀-Alkandicarbonsäure-basierten Weichmachern.

4. Mehrkomponenten-Harzsystem nach einem der Ansprüche 1 bis 3, wobei der mindestens eine Weichmacher ausgewählt ist aus der Gruppe bestehend aus Diethylmalonat, Diethyladipat, Diisobutyladipat, Bis(2-ethylhexyl)adipat, Diisononyladipat, Diethylfumarat, 1,2-Cyclohexandicarbonsäurediisononylester, Diisononylphthalat, Tris(2-ethylhexyl)trimellitat, und Methyl-O-acetylricinoleat und Mischungen von zwei oder mehr davon, vorzugsweise ist der Weichmacher Diethylmalonat, Diethylfumarat oder Diethyladipat.

5. Mehrkomponenten-Harzsystem nach einem der Ansprüche 1 bis 4, wobei das Mehrkomponenten-Harzsystem von 1,0 Gew.-% bis 4,0 Gew.-%, vorzugsweise von 1,2 Gew.-% bis 3,5 Gew.-%, besonders bevorzugt von 1,4 Gew.-% bis 3,3 Gew.-% des Weichmachers enthält.

6. Mehrkomponenten-Harzsystem nach einem der Ansprüche 1 bis 5, wobei die Isocyanatkomponente und gegebenenfalls die Aminkomponente zusätzlich ein Silan enthält, das vorzugsweise aus der Gruppe bestehend aus 3-Aminopropyltrialkoxysilanen, 3-Glycidyloxyalkyltrialkoxysilanen, Bis-(3-trialkoxysilylpropyl)aminen, 3-Mercaptopropyltrialkoxysilanen, 3-(Meth)acryloxyalkyltrialkoxysilanen, Alkenylalkoxysilanen, Tetraalkoxysilanen, Trialkoxyalkylsilanen und Gemischen von zwei oder mehr davon ausgewählt ist, vorzugsweise ist das Silan 3-Glycidyloxypropyltrimethoxysilan, 3-(Meth)acryloylpropyltrimethoxysilan, Vinyltrimethoxysilan oder Vinylethoxysilan.

7. Mehrkomponenten-Harzsystem nach einem der Ansprüche 1 bis 6, wobei die Aminkomponente als ein gegenüber Isocyanatgruppen reaktives Amin Diethyltoluoldiamin (DETDA) und zusätzlich ein weiteres gegenüber Isocyanatgruppen reaktives Amin enthält.

8. Mehrkomponenten-Harzsystem nach einem der Ansprüche 1 bis 7, wobei das Polyisocyanat und das Amin in einem Mengenverhältnis vorliegen, bei dem das Verhältnis von mittlerer NCO-Funktionalität des Polyisocyanats zu mittlerer NH-Funktionalität des Amins zwischen 0,3 und 2,0 liegt.

9. Mehrkomponenten-Harzsystem nach einem der Ansprüche 1 bis 8, wobei die Isocyanatkomponente mindestens ein aliphatisches Polyisocyanat ausgewählt aus der Gruppe bestehend aus Bis-(isocyanatoalkyl)ethern oder Alkandiisocyanaten, vorzugsweise Methandiisocyanat, Propandiisocyanaten, Butandiisocyanaten, Pentandiisocyanaten, Hexandiisocyanaten, vorzugsweise Hexamethylendiisocyanat, HDI), Heptandiisocyanaten, vorzugsweise 2,2-Dimethylpentan-1,5-diisocyanat, Octandiisocyanaten, Nonandiisocyanaten, vorzugsweise Trimethyl-HDI (TMDI) in der Regel als Gemisch der2,4,4- und 2,2,4-Isomeren), 2-Methylpentan-1,5-diisocyanat (MPDI), Nonantriisocyanaten (vorzugsweise 4-Isocyanatomethyl-1,8-octandiisocyanat, 5-Methylnonandiisocyanat, Dekandiisocyanaten, Dekantriisocyanaten, Undekandiisocyanaten, Undekantriisocyanaten, Dodecandiisocyanaten, Dodecantriisocyanaten, 1,3- sowie 1,4-Bis-(isocyanatomethyl)cyclohexan (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI), 3(4)-Isocyanatomethyl-1-methyl-cyclohexylisocyanat (IMCI), Octagydro-4,7-methano-1H-indendiemthyldiisocyanat, Norbornendiisocyanat, 5-Isocyanato-1-(isocyanatomethyl)-1,3,3-trimethylcyclohexan, oder Ureylenbis(p-phenylenmethylene-p-phenylen)diiscoyanat; ganz besonders bevorzugt sind Hexamethylendiisocyanat, HDI) und Pentadiisocyanat (PDI), sowie Gemische davon enthält.

10. Mehrkomponenten-Harzsystem gemäß einem Ansprüche 1 bis 9, wobei die Aminkomponente mindestens ein gegenüber Isocyanatgruppen reaktives Amin ausgewählt aus der Gruppe bestehend aus 1,2-Diaminoethan(ethylendiamin), 1,2-Propandiamin, 1,3- Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diaminomethyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 3,3'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02'6]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2, 2,6,6-tetramethylpiperidin-4-yl)propan-1,3-diamin, 2-Methylpentandiamin (DYTEKA), N-Ethylaminopiperazin (N-EAP), N-Aminoethyl-piperazine (N-AEP), 2,4,6-Tri(propan-2-yl)benzol-1,3-diamin, 4-Ethyl-2,6-di(propan-2-yl)benzol-1,3-diamin, 4-Methyl-2,6-di(propan-2-yl)benzol-1,3-diamin, 2,5-Bis(methylsulfonyl)-1,4-benzoldiamin, 5-Chloro-4,6-diethyl-2-methyl-1,3-benzendiamin, 5-Chloro-4,6-diethyl-6-methyl-1,3-benzoldiamin, 4-Fluoro-5-(1-methylethyl)-1,2-benzoldiamin, 2,4,6-Trimethyl-5-nitro-1,3-benzoldiamin sowie Mischungen davon enthält.

11. Mehrkomponenten-Harzsystem nach einem der Ansprüche 1 bis 10, wobei das Mehrkomponenten-Harzsystem als Isocyanatkomponente ein Gemisch aus Hexamethylen-1,6-diisocyanat Homopolymer und Hexamethylen-1,6-diisocyanat Biuret Oligomerisationsprodukt, oder ein Gemisch aus Hexamethylendiisocyanatoligomer und Isocyanurat, als Aminkomponente ein Isomerengemisch aus 6-Methyl-2,4-bis(methylthio)phenylen-1,3-diamin und 2-Methyl-4,6-bis(methylthio)phenylen-1,3-diamin, und als Weichmacher Diethylmalonat, Diethylfumarat oder Diethyladipat, und Mischungen von zwei oder mehr davon, vorzugsweise Diethylmalonat oder Diethylfumarat enthält.

12. Mörtelmasse erhältlich durch Vermischen der Isocyanatkomponente, der Aminkomponente, eines Molekularsiebs, mindestens eines Weichmachers, gegebenenfalls eines Silans, wie in den Ansprüchen 1 bis 11 definiert und gegebenenfalls Diethyltoluoldiamin (DETDA).

13. Verfahren zur chemischen Befestigung von Konstruktionselementen in mineralischen Untergründen, vorzugsweise in Bohrlöchern, wobei zur chemischen Befestigung ein Mehrkomponenten-Harzsystem nach einem der Ansprüche 1 bis 11 oder eine Mörtelmasse nach Anspruch 12 verwendet wird.

14. Verwendung eines Mehrkomponenten-Harzsystem nach einem der Ansprüche 1 bis 11 oder einer Mörtelmasse nach Anspruch 12 zur chemischen Befestigung von Konstruktionselementen in mineralischen Untergründen oder in Holz, vorzugsweise in Bohrlöchern.

15. Verwendung eines Weichmachers in einem Mehrkomponenten-Harzsystem auf Basis von Isocyanat-Amin-Addukten für die chemische Befestigung zur Erhöhung der Auszugsfestigkeit (Verbundspannung) bei niedrigen Temperaturen, insbesondere bei Temperaturen unterhalb von 0°C.
